Europäisches Patentamt

European Patent Office

Office européen des brevets

(19)

(11) Veröffentlichungsnummer: **0 277 578**
**A2**

(12) **EUROPÄISCHE PATENTANMELDUNG**

(21) Anmeldenummer: 88101062.3

(22) Anmeldetag: 26.01.88

(51) Int. Cl.⁴ **F01N 3/20** , F01N 3/28 ,
F02M 23/00 , F02M 25/06

(30) Priorität: 05.02.87 DE 3703462

(43) Veröffentlichungstag der Anmeldung:
10.08.88 Patentblatt 88/32

(84) Benannte Vertragsstaaten:
AT BE CH DE ES FR GB GR IT LI LU NL SE

(71) Anmelder: **Blume, Axel Jens**
**Kardinal-Schulte-Strasse 14**
**D-5060 Bergisch Gladbach(DE)**

Anmelder: **Pommer, Fredi**
**Bogenstrasse 1**
**D-5630 Remscheid(DE)**

(72) Erfinder: **Blume, Axel Jens**
**Kardinal-Schulte-Strasse 14**
**D-5060 Bergisch Gladbach(DE)**
Erfinder: **Pommer, Fredi**
**Bogenstrasse 1**
**D-5630 Remscheid(DE)**

(74) Vertreter: **Dipl.-Ing. H. Hauck Dipl.-Phys. W.**
**Schmitz Dipl.-Ing. E. Graalfs Dipl.-Ing. W.**
**Wehnert Dr.-Ing. W. Döring**
**Mörikestrasse 18**
**D-4000 Düsseldorf 30(DE)**

(54) Verfahren zur Reduzierung von Schadstoffen im Abgas einer Brennkraftmaschine sowie Vorrichtung zur Durchführing des Verfahrens.

(57) Es werden ein Verfahren zur Reduzierung von Schadstoffen im Abgas einer mit einem Luft-Kraftstoff-Gemisch betriebenen Brennkraftmaschine sowie Vorrichtungen zur Durchführung des Verfahrens beschrieben. Das Verfahren besteht darin, daß man einerseits das der Brennkraftmaschine zugeführte Luft-Kraftstoff-Gemisch durch Zugabe voan Zusatzluft abmagert und andererseits das von der Brennkraftmaschine abgegebenen Abgas katalytisch behandelt. Die Vorrichtungen zur Durchführung des Verfahrens umfassen eine Einrichtung zur Zuführung von Zusatzluft und einen Katalysator, der entweder als ungeregelter Dreiwegekatalysator oder als reiner Oxidationskatalysator ausgebildet ist.

FIG.1

## Verfahren zur Reduzierung von Schadstoffen im Abgas einer Brennkraftmaschine sowie Vorrichtung zur Durchführung des Verfahrens

Die vorliegende Erfindung betrifft ein Verfahren zur Reduzierung von Schadstoffen im Abgas einer Brennkraftmaschine mit den Merkmalen des Oberbegriffs des Patentanspruchs 1 sowie Vorrichtungen zur Durchführung des Verfahrens nach den Oberbegriffen der Patentansprüche 4 und 5.

Um die Schadstoffe im Abgas einer mit einem Luft-Kraftstoff-Gemisch betriebenen Brennkraftmaschine zu reduzieren, ist es bekannt, das Abgas der Brennkraftmaschine katalytisch zu entgiften. Hierbei werden die im Abgas enthaltenen, nicht verbrannten Kohlenwasserstoffe zu Kohlendioxid und Wasser und das ebenfalls im Abgas vorhandene Kohlenmonoxid zu Kohlendioxid oxidiert, wobei derartige Oxiodationsvorgänge die Anwesenheit von Sauerstoff im Abgas erforderlich machen. Die Stickstoffoxide, die bei der Verbrennung des Luft-Kraftstoff-Gemisches in der Brennkraftmaschine als Reaktionsprodukt von Sauerstoff mit Stickstoff aus der Luft anfallen, reagieren am Katalysator mit dem im Abgas vorhandenen Kohlenmonoxid unter Bildung von Stickstoff und Kohlendioxid.

Grundsätzlich ist bei den Katalysatoren, die im Abgasstrom der Brennkraftmaschine angeordnet sind, zwischen Zweibettkatalysatoren und Einbettkatalysatoren (Dreiwegekatalysatoren) zu unterscheiden. Bei den Zweibettkatalysatoren werden die zuvor beschriebenen Oxidations-und Reduktionsreaktionen nacheinander an zwei verschiedenen Katalysatoren durchgeführt. Im ersten Katalysator werden dabei die Stickoxide unter Luftausschluß bzw. Luftmangel reduziert, anschließend erfolgt nach Zugabe von Sekundärluft in das Abgas die Oxidation von Kohlenmonoxid und Kohlenwasserstoff. Beim Einbettkatalysator laufen Reduktion und Oxidation gleichzeitig ab. Hierbei ist es zur Verminderung der Schadstoffe, d. h. zur Verminderung von $NO_x$, CO und $C_nH_m$ erforderlich, daß im Abgas nur eine bestimmte Menge Sauerstoff enthalten ist, da ansonsten eine unerwünschte Reaktion von Stickstoff bzw. $NO_x$ zu Stickstoffoxiden stattfindet und somit die Schadstoffkonzentration im Abgas erhöht würde. Um die Sauerstoffkonzentration im Abgas zu steuern, werden Lambda-Sonden verwendet, die die Sauerstoffkonzentration im Abgas messen und das der Brennkraftmaschine zugeführte Luft-Kraftstoff-Verhältnis auf einen $\lambda$-Wert von 1 regeln. Ein derartiger $\lambda$-Wert bedeutet, daß ein stöchiometrisches Verhältnis von Luft und Kraftstoff der Brennkraftmaschine zugeführt werden kann, so daß stets im Abgas die für die vorstehend beschriebenen Reaktionen notwendige Sauerstoffkonzentration vorhanden ist.

Der zuvor beschriebene geregelte Einbettkatalysator (Dreiwegekatalysator) weist den Nachteil auf, daß erst bei Temperaturen etwa oberhalb von 300 °C die Lambda-Sonde einwandfrei arbeitet. Dies hat zur Folge, daß insbesondere in der Warmlaufphase der Brennkraftmaschine keine einwandfreie Schadstoffverringerung möglich ist. Darüberhinaus erfordert der geregelte Einbettkatalysator eine relativ aufwendige Steuerung, die sich in einem entsprechenden Preis niederschlägt.

Der vorliegenden Erfindung liegt die Aufgabe zugrunde, ein Verfahren und Vorrichtungen der angegebenen Art zur Verfügung zu stellen, mit dem bzw. denen die Konzentration an Schadstoffen im Abgas von Brennkraftmaschinen weiter bzw. mit einem geringeren Kostenaufwand reduziert werden kann.

Diese Aufgabe wird erfindungsgemäß durch ein Verfahren mit den kennzeichnenden Merkmalen des Patentanspruchs 1 sowie durch Vorrichtungen mit den kennzeichnenden Merkmalen der Patentansprüche 4 ud 5 gelöst.

Das erfindungsgemäße Verfahren beruht auf dem Grundgedanken, zur Verrringerung der Konzentration der Schadstoffe im Abgas zwei Maßnahmen vorzusehen. Die erste Maßnahme besteht in einer Zugabe von Zusatzluft zu dem der Brennkraftmaschine zugeführten Luft-Kraftstoff-Gemisch, was zu einer erheblichen Senkung der $NO_x$-und CO-Konzentrationen im Abgas führt. Gleichzeitig wird hierdurch der Stickstoff-und Sauerstoffgehalt des Abgases erhöht, so daß die zweite Maßnahme, die in einer katalytischen Umwandlung der in dem Abgas enthaltenen Kohlenwasserstoffe in Kohlendioxid besteht, aufgrund der hohen Sauerstoffkonzentration wirksam durchgeführt wird. Überraschend konnte dabei festgestellt werden, daß trotz relativ hoher Stickstoff-und Sauerstoffkonzentrationen im Abgas durch Reaktion von Stickstoff mit Sauerstoff kein $NO_x$ neu am Katalysator gebildet wird, so daß bei dem erfindungsgemäßen Verfahren das Abgas der Brennkraftmaschine sehr geringe $NO_x$-, CO-und Kohlenwasserstoffkonzentrationen aufweist.

Das erfindungsgemäße Verfahren weist neben der wirkungsvollen Reduzierung der Schadstoffe noch eine Reihe weiterer Vorteile auf. So wurde festgestellt, daß der Katalysator im Vergleich zu einem herkömmlich ausgebildeten Katalysator erheblich verkleinert, beispielsweise auf etwa 20 % bis etwa 50 % der bei einem herkömmlichen Katalysator bisher erforderlichen Fläche, werden kann, ohne daß sich dadurch die schadstoffkonzentration erhöht. Dies wiederum hat neben der Ersparnis an relativ kostspieligen Katalysatoren noch zusätzlich den Vorteil, daß ein derartiger Katalysator eine relativ kompakte Bauweise aufweist und somit auch besonders platzsparend auch an schwer zugänglichen Stellen, wie beispielsweise im Bereich des Auslaßkrümmers, einbaubar ist. Das geringe Bauvolumen bzw. die geringere Masse des Katalysators verbessert die Wärmeleitung bzw. Wärmeabführung und verhindert ein lokales Überhitzen, was sich in einem schnellen und gleichmäßigen Aufheizen eines derartigen Katalysators ausdrückt, so daß er bereits zu Beginn der Warmlaufphase der Brennkraftmaschine wirksam die Kohlenwasserstoffkonzentration im Abgas verringert, während durch die Abmagerung des zugeführten Luft-Kraftstoff-Gemisches schon beim Starten die $NO_x$-und CO-Emissionen auf ein Minimum gesenkt werden. Wegen des verkleinerten Katalysators ist bei dem erfindungsgemäßen Verfahren auch der vom Katalysator hervorgerufene Abgasgegendruck entsprechend reduziert, so daß ein Leistungsabfall der Brennkraftmaschine nicht feststellbar ist. Die gleichmäßige Temperaturverteilung im Katalysator und die gute Wärmeableitung drücken sich darüberhinaus noch in einer verlängerten Standzeit des Katalysators aus.

Besonders gute Werte bezüglich der Schadstoffemissionen der Brennkraftmaschine werden bei dem erfindungsgemäßen Verfahren dann erreicht, wenn man als Zusatzluft ein Gemisch aus gefilterter Außenluft und der aus dem Kurbelgehäuse der Brennkraftmaschine stammenden Atmosphäre verwendet. Hierbei weist diese, aus dem Kurbelgehäuse zugeführte Atmosphäre beispielsweise Öldämpfe, Ölnebel, Ölpartikel, Kondenswasser etc. auf, d. h. ein Gemisch, das mit nichtbrennbaren Partikeln angereichert ist. Die Zuführung eines derartigen Gemisches führt zu einer besonders wirksamen Verbrennung des der Brennkraftmaschine zugeführten Luft-Kraftstoff-Gemisches, so daß eine besonders große Reduzierung der im Abgas der Brennkraftmaschine enthaltenen Schadstoffe $NO_x$ und CO erreichbar ist. Bei Zuführung eines derartigen Gemisches als Zusatzluft wurden $NO_x$-und CO-Verringerungen erreicht, die im Vergleich zu einer nicht mit einem abgemagerten Luft-Kraftstoff-Gemisch betriebenen Brennkraftmaschine für $NO_x$ zwischen etwa 30 % und etwa 50 % und für CO zwischen etwa 50 % und etwa 80 % liegen, während durch den im Abgasstrom angeordneten Katalysator die CH-Konzentration um etwa 45 % bis etwa 70 % gesenkt wird.

Bezüglich der Höhe der Abmagerung des der Brennkraftmaschine zugeführten Luft-Kraftstoff-Gemisches ist festzuhalten, daß bei dem erfindungsgemäßen Verfahren mit zunehmender Abmagerung die Schadstoffemissionen verringert werden. Vorzugsweise wird das Luft-Kraftstoff-Gemisch auf $\lambda$-Werte zwischen etwa 1,1 und 1,35, insbesondere zwischen etwa 1,15 und 1,25, abgemagert, da hierbei die Werte für $NO_x$, CO und $C_nH_m$ besonders niedrig liegen.

Eine erste Ausführungsform der erfindungsgemäßen Vorrichtung zur Durchführung des vorstehend beschriebenen Verfahrens sieht vor, daß im Ansaugbereich der Brennkraftmaschine eine Einrichtung angeordnet ist, die das der Brennkraftmaschine zugeführte Luft-Kraftstoff-Gemisch mit Zusatzluft beaufschlagt und so eine Abmagerung bewirkt. Im einfachsten Fall besteht diese Einrichtung aus einer zusätzlichen Ansaugleitung, die stromab des Vergasers das im Vergaser erzeugte Luft-Kraftstoff-Gemisch zusätzlich mit gefilterter Zusatzluft beaufschlagt, wobei ein entrsprechendes Regelorgan der Ansaugleitung zur Steuerung der Menge der zugeführten Zusatzluft zugeordnet ist. Hierbei kann das Regelorgan beispielsweise durch Abgriff des Unterdrucks im Ausgangskanal den freien Querschnitt der Zuströmleitung für die Zusatzluft steuern bzw. den dem Zündverteiler zugeführten Unterdruck modulieren. Ebenso ist es möglich, die Einrichtung derart auszubilden, daß ein Gemisch auf gefilterter Außenluft und aus dem Kurbelbehäuse zugeführter Atmosphäre zur Abmagerung des Luft-Kraftstoff-Gemisches verwendet wird, wie die nachfolgend noch für eine spezielle Ausführungsform der Einrichtung näher beschrieben ist.

Zusätzlich zu der zuvor beschriebenen Einrichtung weist die erfindungsgemäße Vorrichtung einen im Abgasstrom angeordneten Katalysator auf, des als ungeregelter Einbettkatalysator ausgebildet ist. Hierbei besitzt dieser Katalysator beispielsweise als katalytische Beschichtung eine Platin-und/oder Rhodiumoberfläche, wobei eine Mischung von Platen und Rhodium, die beispielsweise aus 5 Teilen Platin und 1 Teil Rhodium besteht, gute Ergebnisse bezüglich der Umwandlung der Kohlenwasserstoffe in Kohlendioxid ergibt.

Bei einer weiteren Ausführungsform der erfindungsgemäß vorgeschlagenen Vorrichtung ist die Einrichtung zur Abmagerung des Luft-Kraftstoff-Gemisches entsprechend der vorstehend beschriebenen Ausführungsform ausgebildet. Im Gegensatz dazu jedoch weist diese Ausführungsform einen Katalysator auf, der nicht, wie der vorstehend beschriebene Katalysator als Redox-Katalysator, sondern lediglich als Oxidations-Katalysator ausgebildet ist. Überraschenderweise werden an einem derartigen Oxidations-Katalysator überwiegend nur die Kohlenwasserstoffe im Abgas zu Kohlendioxid oxidiert, während der ebenfalls im Abgas noch in relativ hoher Konzentration enthaltene Stickstoff bzw. die in geringen Konzentrationen vorhandenen Stickstoffoxide nicht in $NO_x$ bzw. $NO_2$ umgewandelt werden, obwohl für eine derartige Reaktion aufgrund der Abmagerung noch genügend Sauerstoff im Abgas vorhanden ist.

Als Träger für den Katalysator können die an sich bekannten Trägermaterialien verwendet werden, wobei es sich hierbei beispielsweise um Metall-oder Keramikträger handelt, die die üblichen Formen, beispielsweise Wabenstrukturen, aufweisen. Besonders gut lassen sich bei der erfindungsgemäßen Vorrichtung Metallbettkatalysatoren verwenden, da diese eine Reihe von positiven Eigenschaften, wie beispielsweise gute thermische Eigenschaften, hohe mechanische Festigkeit und geringe Bauvolumina, aufweisen. Darüberhinaus kann ein derartiger Metallbettkatalysator wegen seiner hohen thermischen Beständigkeit im Bereich des Auslaßkrümmers, insbesondere unmittelbar an der Verbindung des Auslaßkrümmers mit dem Motorblock der Brennkraftmaschine, angeordnet werden. Eine derartige motornahe Anbringung des Katalysators bewirkt, daß dieser bereits nach einer sehr kurzen Anlaufphase nach Starten der Brennkraftmaschine durch die Abgase auf die erforderliche Betriebstemperatur aufgeheizt wird, was sich auch in der Warmlaufphase der Brennkraftmaschine durch entsprechend niedrige Schadstoffemissionen ausdrückt.

Neben der besonders wirksamen Verringerung der Schadstoffemissionen weist die erfindungsgemäße Vorrichtung noch den Vorteil auf, daß bedingt durch die Abmagerung des der Brennkraftmaschine zugeführten Luft-Kraftstoff-Gemisches eine Kraftstofferspamis auftritt, die in der Kaltlaufphase etwa im Bereich zwischen 15 % bis 20 % liegt. Ein merklicher Leistungsverlust oder ein unruhiger Lauf der mit der erfindungsgemäßen Vorrichtung ausgestatteten Brennkraftmaschine konnte nicht festgestellt werden. Bedingt dadurch, daß die erfindungsgemäße Vorrichtung die CO-und $NO_x$-Schadstoffemissionen durch Abmagerung des der Brennkraftmaschine zugeführten Luft-Kraftstoff-Gemisches senkt und durch den im Abgasstrom angeordneten Katalysator überwiegend nur die Kohlenwasserstoff-Emissionen verringert, kann der verwendete Katalysator im Vergleich zu einem konventionellen Katalysator ein erheblich geringeres Bauvolumen aufweisen, das etwa zwischen 20 % und etwa 40 % eines herkömmlichen Katalysators entspricht. Dies wiederum führt dazu, daß ein derartiger Katalysator wesentlich besser einbaufähig ist und darüberhinaus noch die bereits eingangs genannten Vorteile aufweist. Auch wird durch das Abmagern des Luft-Kraftstoff-Gemisches die Brennraumtemperatur in der Brennkraftmaschine reduziert, was sich positiv auf die bei der Verbrennung entstehenden Schadstoffe sowie auf die Lebensdauer der Brennkraftmaschine auswirkt.

Weiterbildungen des Erfindungsgegenstandes gehen aus den Unteransprüchen hervor.

Die Erfindung wird nunmehr nachfolgend anhand eines Ausführungsbeispiels in Verbindung mit der Zeichnung im einzelnen erläutert. Es zeigen:

Figur 1 eine schematische Gesamtansicht der Vorrichtung;

Figur 2 eine schematische Gesamtansicht der Einrichtung zur Abmagerung des Luft-Kraftstoff-Gemisches;

Figur 3 eine Draufsicht auf ein mit einem Hohlsteg versehenes Verteilerzwischenstück;

Figur 4 eine Vertikalschnitt durch das Verteilerzwischenstück gemäß Figur 3;

Figur 5 den in Figur 3 gezeigten Hohlsteg in der Draufsicht;

Figur 6 einen Vertikalschnitt durch den Hohlsteg der Figur 4;

Figur 7 einen Schnitt durch ein Regelorgan;

Figur 8 eine Seitenansicht des Regelorgans der Figgur 7;

Figur 9 einen weiteren Schnitt durch das Regelorgan;

Figur 10 eine perspektivische Ansicht eines Metallbettkatalysators im nichteingebauten Zustand; und

Figur 11 eine Draufsicht auf ein mit zwei Metallbettkatalysatoren versehenes Hosenrohr zum Einbau in das Abgasabführsystem einer Brennkraftmaschine.

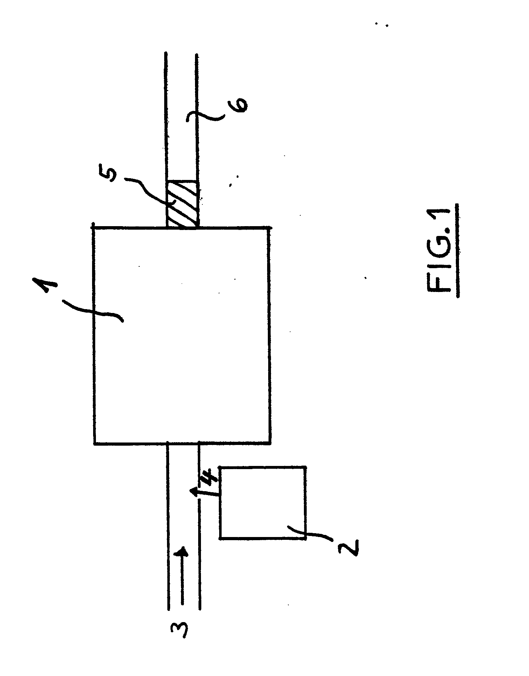

In Figur 1 ist schematisch eine Gesamtansicht der Vorrichtung dargestellt. Hierbei weist die Vorrichtung zur Reduzierung der Schadstoffemissionen einer Brennkraftmaschine 1 eine Einrichtung 2 auf, durch die das der Brennkraftmaschine in Pfeilrichtung 3 zugeführte Luft-Kraftstoff-Gemisch mit Zusatzluft beaufschlagt wid, wie dies schematisch durch den Pfeil 4 angedeutet ist. Im Abgasstrom der Brennkraftmaschine 1 ist ein Katalysator 5 angeordnet, bei dem es sich vorzugsweise um einen ungeregelten Dreiwegekatalysator oder um einen Oxidationskatalysator handelt.

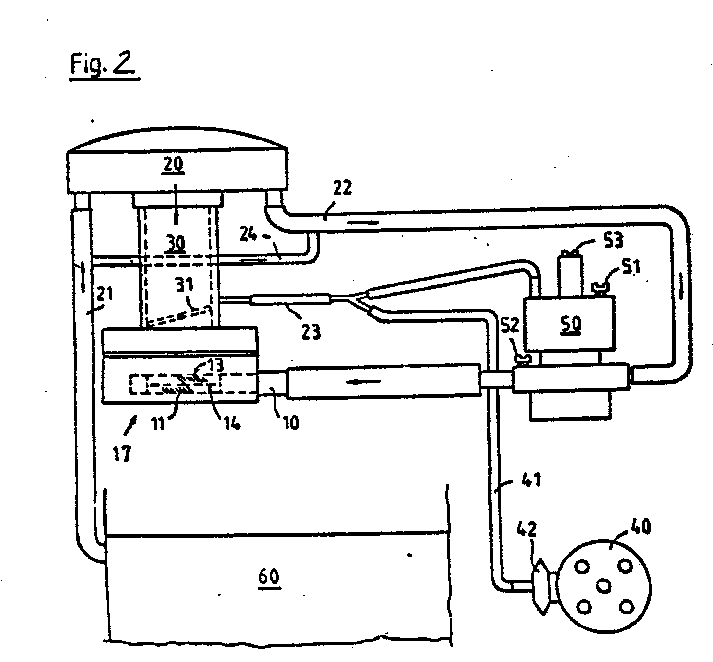

Die Figur 2 zeigt detailliert die Einrichtung 2. Anhand dieser Figur wird das Zusammenwirken der Mischkammer mit dem Luftfilter 20, dem Vergaser 30, einem Zündverteiler 40, 42 und einem speziell ausgebildeten Regelorgan 50 für die Zusatzluft erläutert. Über das Luftfilter 20 wird die Luft angesaugt, und die gefilterte Luft wird in den Vergaser 30 eingeführt, in dem eine übliche Drosselkappe 31 angeordnet ist. Das Luftfilter 20 ist zur Belüftung des Kurbelgehäuses 60 mit diesem über eine Rohrleitung 21 verbunden. Zwischen der Rohrleitung 21 und einer Zuströmleitung 22 für die Zusatzluft besteht eine Verbindung über eine Rohrleitung 24. Vom Vergaser 30 selbst führt eine Unterdruckleitung 23 zum Relelorgan 50 und mittels eines T-Stückes eine weitere Unterdruckleitung 41 zum Zündverteiler 40, 42.

In der Leitung 21 herrscht beim Niedergang des Kolbens der Brennkraftmaschine Unterdruck und beim Aufwärtsgang Überdruck. Dieser Vorgang wird nutzbar gemacht, um die Leitung 21 zur Entnahme von Zusatzluft anzuzapfen. Dies geschieht durch die Leitung 24, die eine direkte, im Querschnitt vergleichsweise engere Verbindungsleitung zwischen der Leitung 21 und der Zuströmleitung 22, die vom Luftfilter 20 zum Regelorgan 50 führt, bildet.

Der pulsierende Luftstrom zwischen Kurbelgehäuse 60 und der Rohrleitung 21 enthält Öldämpfe in

4

Form eines Nebels. Dies erklärt auch die bekannte Erscheinung des Verölens von Teilen des Filters 20.

Dieser Niederschlage des Ölnebels hört nach Installation der Verbindungsleitung 24 auf oder geht stark zurück. Hieraus ist zu schließen, daß die Verbindungsleitung 24 beachtliche Teile des Ölnebels in die zum Regelorgan 50 führende Zuströmleitung 22 überführt. Von dort gelangt das so angereicherte und entstandene Luftgemisch in die Mischkammer 18, d. h., daß die Mischung von erst aufbereitetem Vergaserkraftstoff mit einer Mischung von Reinluft aus dem Filter und mit Ölnebel angereicherter Luft aus der Verbindungsleitung 24 ein hochaufbereitetes, abgemagertes Kraftstoffgemisch entstehen läßt, das die Verbrennung in der Brennkraftmaschine bezüglich des Kraftstoffverbrauchs und der Schadstoffemission, insbesondere von $NO_x$ und CO, günstiger ablaufen läßt.

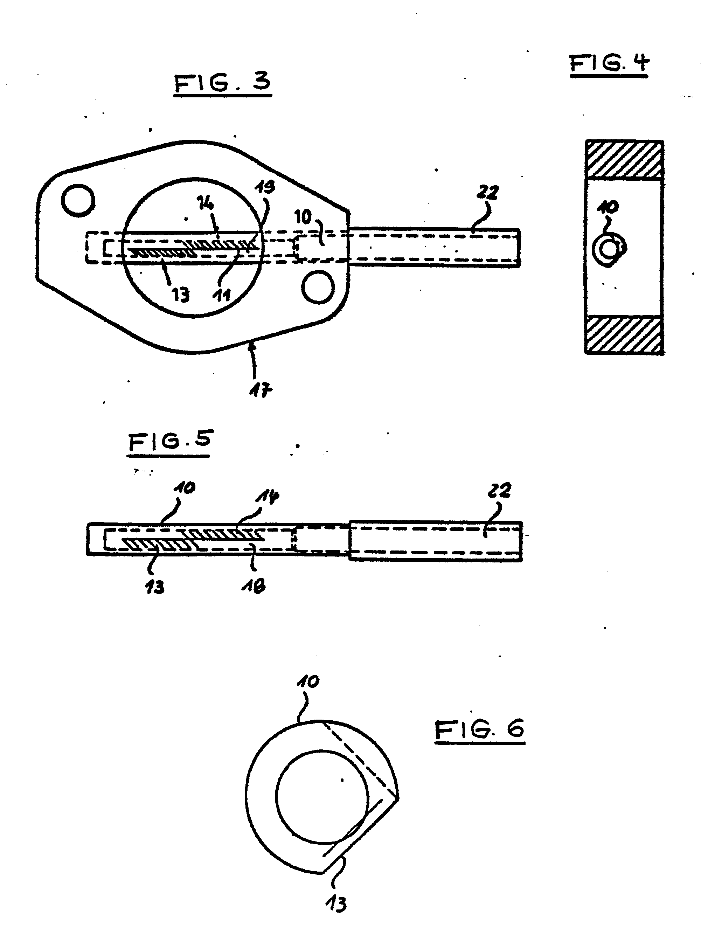

In den Figuren 3 - 6 ist der als Hohlsteg 10 ausgebildete Verteiler dargestellt, der an einem Verteilerzwischenstück befestigt ist. Der Hohlsteg 10 ist im Bereich des Ansaugkanals mit schlitzförmigen Ausströmöffnungen 11 versehen. Besonders aus Figur 6 ist ersichtlich, daß der Holsteg 10 Schrägflächen 13, 14 aufweist, die miteinander einen Winkel bilden, wobei das gebildete Dreieck eine Halbrundbasis aufweist. Auf den Schrägflächen 13, 14 sind Schlitzgruppen vorgesehen, deren Schlitze winklig zueinander angeordnet sind (nicht gezeigt). Der Hohlsteg 10 bildet eine Mischkammer 18. Die Luftzuführung zum Hohlsteg 10 ist kurz vor der Mischkammer 18 verengt, so daß sich an dieser Stelle eine erhöhte Strömungsgeschwindigkeit ergibt.

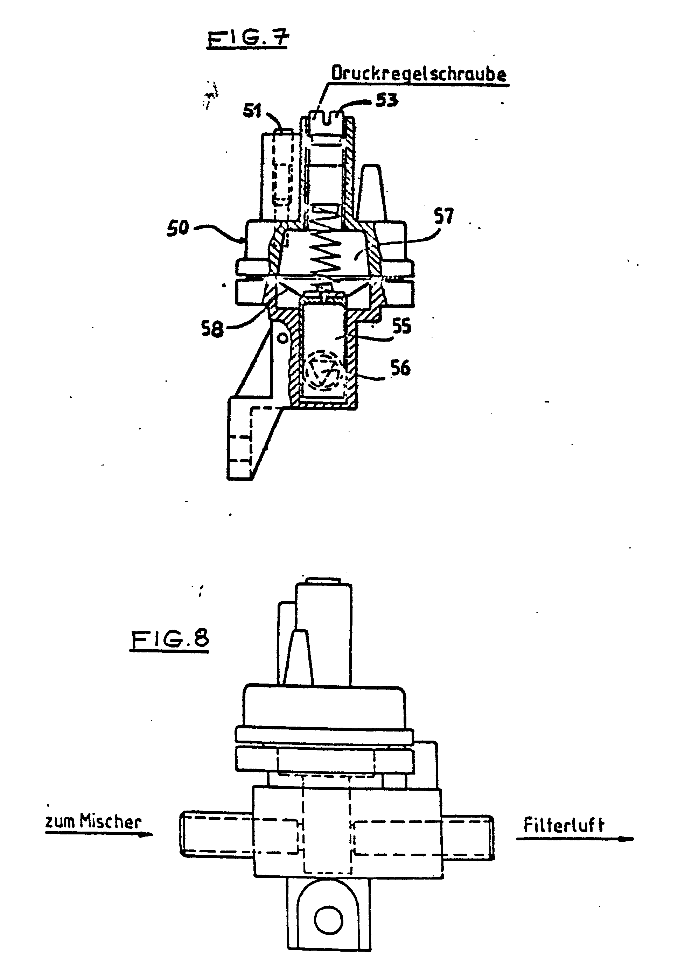

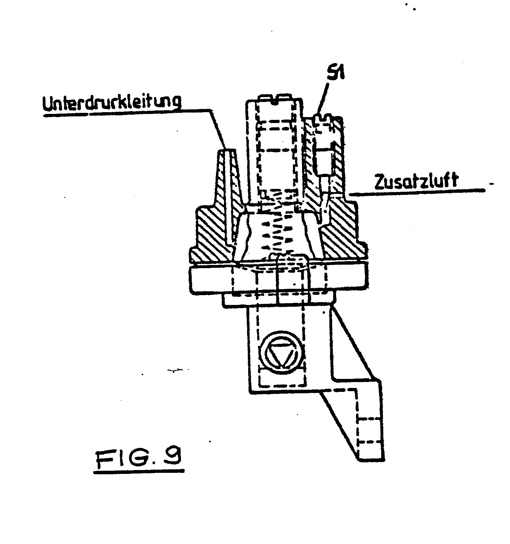

Das Regelorgan 50 für die Zusatzluft weist, wie die Figuren 7 - 9 zeigen, eine Bypassregelung 51, eine Leerlaufregelung 52, eine Druckregelung 53 für den Reglerkolben 55 und eine Zuleitung 54 zum Hohlsteg 10 auf. Der Kolben 55 ist als Gleitkolben mit einem inneren Dreieckskörper 56 ausgebildet. Das Regelorgan hat eine Membrankammer 57. Die Membran 58 ist federbelastet.

Der Verteiler 70 und der Zündverteiler 40, 42 arbeiten so zusammen, daß im Lastbetrieb der Zündverteiler eine Zündzeitpunktverstellung in Richtung auf magere Einstellung erhält.

Die Arbeitsweise des Verteilers 17 ist durch eine Doppelwirkung nach zwei Seiten gekennzeichnet. Die beiden Strömungsflügel aus dem Schlitzgruppen treffen auf das im Ansaugkanal strömende Gas. So wird auf kleinstem Raum höchste Turbulenz erzeugt. Diese hohe Turbulenz macht die hier in Rede stehende Einrichtung zur Abmagerung des zugeführten Luft-Kraftstoff-Gemisches besonders geeignet, d. h. nicht nur im Hinblick auf eine bessere Ausnutzung des Kraftstoffes, sondern auch im Hinblick auf eine beachtliche Verminderung insbesondere der $NO_x$-und CO-Schadstoffemissionen.

Der Vorteil der erfindungsgemäßen Lösung besteht somit insbesondere darin, daß kein geregelter Katalysator zur Anwendung gelangen muß, sondern daß stattdessen ein ungeregelter Katalysator, sei es ein Redox-Katalysator oder ein Oxidations-Katalysator, verwendet werden kann. Diese Tatsache ist überraschend, da die Fachwelt davon ausgehen mußte, daß das aus einem abgemagerten Gemisch stammende Abgas aufgrund des relativ hohen Luft-bzw. $O_2$-und $N_2$-Anteiles einer chemischen Reduktion des $NO_x$-Anteiles im Abgas entgegenwirken würde bzw. einen bereits durch Abmagerung verrringerten $NO_x$-Anteil bei einer nachfolgenden katalytischen Behandlung wieder erhöhen würde (aufgrund der Neubildung von $NO_x$ durch Reaktion von $N_2$ mit $O_2$). Stattdessen hat sich jedoch gezeigt, daß das aus der Verbrennung eines abgemagerten Gemisches stammende Abgas trotz der relativ hohen Luftanteile selbst durch eine Redox-Katalysator einer weiteren Schadstoffreduzierung in bezug auf die Kohlenwasserstoffanteile unterziehbar ist, ohne daß hierbei die bereits durch Abmagerung erzielten niedrigen $NO_x$-und CO-Werte gefährdet werden. Erfindungsgemäß kann somit auf eine Lambda-Regelung verzichtet werden, und es wird trotz allem eine relativ große Verringerung aller drei Schadstoffanteile im Abgas erreicht.

Die im Rahmen der Erfindung durchgeführten Untersuchungen haben gezeigt, daß durch die erfindungsgemäße Lösung, die die Zuführung von Zusatzluft vor der Brennkraftmaschine in das der Brennkraftmaschine zugeführte Luft-Kraftstoff-Gemisch in Verbindung mit der Anordnung eines ungeregelten Katalysators im Abgasabführsystem der Brennkraftmaschine beinhaltet, wesentliche Vorteile in bezug auf die Dimensionierung des Katalysators im Vergleich zu mit Katalysatoren versehenen Brennkraftmaschinen, die nicht mit dem erfindungsgemäßen Magerprinzip arbeiten, erreichbar sind. So können bei der erfindungsgemäßen Lösung Katalysatoren eingesetzt werden, die ein Größenvolumen von ca. einem Drittel eines normalen Katalysators für Fahrzeuge besitzen, welche nicht nach dem erfindungsgemäßen Magerkonzept vorzugsweise in einem Bereich von $\lambda$ = 1,25 bis 1,3 arbeiten.

Wie bereits erwähnt, kann es sich bei dem erfindungsgemäß zum Einsatz gelangenden Katalysator um einem reinen Oxidationskatalysator oder um einen Redox-Katalysator handeln. Bei der Erfindung wird davon ausgegangen, daß durch die Einführung von Zusatzluft bei der nachfolgenden Verbrennung die Anteile der Schadstoffe $NO_x$ und CO beträchtlich abgesenkt werden, während der Anteil der Schadstoffe CH in geringerem Maße gesenkt wird. Dieser Schadstoffanteil (CH) wird durch den der Verbrennung nachgeschalteten Katalysator weiter abgesenkt, wobei man davon ausgeht, daß noch genügend Sauerstoff im Abgas vorhanden ist, um eine entsprechende Oxidation der Schadstoffe CH zu $CO_2$ und $H_2O$ durchzuführen.

5

Die erfindungsgemäß gewonnenen Ergebnisse haben dies bestätigt. Überraschenderweise hat sich dabei gezeigt, daß trotz des Arbeitens im außerstöchiometrischen Bereich beherrschbare und steuerbare Reaktionen ablaufen, die die nachfolgende Oxidation von CH, jedoch keine erneute Oxidation des freien Stickstoffs $N_2$ zu Stickoxiden bewirken. Insgesamt ergibt sich somit mit der erfindungsgemäßen Kombination von Magerkonzept und Katalysator eine Reduzierung von allen drei Schadstoffarten.

Unter diesen Voraussetzungen ist es für das erfindungsgemäße Verfahren bzw. die erfindungsgemäßen Vorrichtung ausreichend, wenn mit einem reinen Oxidationskatalysator gearbeitet wird. Es kann somit ein Katalysatorträger zum Einsatz gelangen, der mit einer, eine Oxidation bewirkenden katalytischen Schicht versehen ist, beispielsweise mit reinem Platin, reinem Paladium oder Gemischen davon. Dies schließt jedoch nicht aus, daß für das erfindungsgemäße Verfahren bzw. die erfindungsgemäße Vorrichtung auch Redox-Katalysatoren zum Einsatz gelangen können, d. h. solche Katalysatoren, die neben Oxidationsvorgängen auch Reduktionsvorgänge initiieren bzw. fördern. So können erfindungsgemäß auch die bei heute üblichen geregelten oder ungeregelten Dreiwege-Katalysatoren eingesetzten Redox-Beschichtungen Verwendung finden, beispielsweise Beschichtungen aus einem Gemisch aus Platin und Rhodium im Verhältnis 5 : 1. Aus Kostengründen empfiehlt es sich, so wenig Rhodium wie möglich einzusetzen, so daß die erfindungsgemäße Lösung einen Weg aufzeigt, um den Anteil des Rhodiums, der für Dreiwegekatalysatoren unverzichtbar ist, herabzusetzen. Die Dicke der katalytischen Schicht auf dem Träger kann den heute üblichen Dicken entsprechen.

In diesem Zusammenhang sei noch erwähnt, daß der Einsatz von reinen Oxidationskatalysatoren zur Entgiftung der Abgase von Kraftfahrzeugen grundsätzlich bekannt ist. Derartige Katalysatoren wurden im sogenannten Doppelbett-Verfahren eingesetzt, wobei in einem ersten Reduktions-Katalysator bei stark reduzierenden Bedingungen die Stickoxide umgesetzt und in dem nachgeschalteten Oxidations katalysator die Kohlenwasserstoffe und das Kohlenmonoxid oxidiert wurde. Hierzu wurde Sekundärluft in das Abgassystem an einer Stelle zwischen dem Reduktionskatalysator und dem Oxidationskatalysator eingeführt, um im Oxidationskatalysator die benötigte Menge an $O_2$ zur Verfügung zu haben. Die erfindungsgemäße Lösung unterscheidet sich insofern von diesem bekannten Verfahren, daß hierbei die Sekundärluft nicht nach dem Verbrennungsvorgang eingeführt wird, sondern vor der Verbrennung dem Luft-Kraftstoff-Gemisch zugeführt wird. Während bei dem erstgenannten Verfahren somit die im Oxidationskatalysator zum Einsatz gelangende zusätzliche Luftmenge genau steuerbar ist, sind bei der erfindungsgemäßen Lösung aufgrund der zwischengeschalteten Verbrennung die Abgaszusammensetzungen nicht ohne weiteres vorhersehbar, insbesondere ist der noch im Abgas vorhandene Sauerstoffanteil nicht genau abschätzbar. Demnach konnten aus dem bekannten Verfahren keine Rückschlüsse auf das erfindungsgemäße Verfahren getätigt werden. Es war vielmehr überraschend, daß bei den erfindungsgemäß eingestellten Bedingungen in bezug auf die Einführung von Zusatzluft ($\lambda$ etwa bei 1,15 bis 1,35) im nachgeschalteten Katalysator keine erneute Oxidation mehr von bereits reduzierten Schadstoffanteilen stattfand.

Aufgrund der vorstehend aufgezeigten Kapazitätsverringerungen des Katalysators hat sich als besonders bevorzugte Lösung der Einsatz eines Metallbettkatalysators herauskristallisiert. Derartige Metallbettkatalysatoren besitzen einen monolithischen Wabenkörper als Träger, der von einem Mantelrohr umgeben ist. Solche Katalysatoren sind grundsätzlich bekannt. Es ist jedoch neuartig und erfinderisch, diese zusammen mit dem vorstehend beschriebenen Magerkonzept zur Abgasentgiftung von Kraftfahrzeugen einzusetzen.

Wie spezielle Untersuchungen ergeben haben, haben sich für das erfindungsgemäße Verfahren bzw. die erfindungsgemäße Vorrichtung Metallbettakatalysatoren als besonders geeignet erwiesen, deren Wabenkörper eine Wandstärke von 0,03 - 0.05 mm besitzt. Völlig überraschend hat sich dabei gezeigt, daß bei der erfindungsgemäßen Lösung mit der Zunahme der Zellendichte des Metallbettkatalysatrs keine Zunahme der Schadstoffreduktion verbunden ist. Vielmehr hat es sich herauskristallisiert, daß eine grössere Zellendichte als 250 Zellen pro $Zoll^2$ keine weitere Schadstoffreduzierung bewirkt, sondern den Schadstoffanteil im Abgas, insbesondere den CH-Anteil, wieder ansteigen läßt. Diese Erkenntnis war für die Erfinder völlig überraschend, da auf den ersten Blick eine Zunahme der im Katalysator zur Verfügung stehenden Oberfläche eine verstärkte Oxidation der CH-Anteile im Abgas bewirken müßte. Es hat sich jedoch gezeigt, daß dies in der Praxis nicht der Fall ist, so daß für die erfindungsgemäße Lösung ausschließlich Metallbettkatalysatoren einer Zellendichte von 80 - 250 Zellen pro $Zoll^2$ eingesetzt werden sollten. Besonders gute Ergenbisse haben sich mit einer Zellendichte von 80 - 150 Zellen pro $Zoll^2$ erreichen lassen, wobei der Standardwert von 100 Zellen pro $Zoll^2$ am meisen bevorzugt wird.

Es versteht sich, daß der als Träger dienende Wabenkörper des Metallbettkatalysators zuerst mit einer sogenannten Washcoat-Schicht ($Al_2O_3$) versehen ist, auf der sich dann die katalytisch wirksame Schicht befindet. Ein derartiger Aufbau eines Metallbettkatalysators ist bekannt.

Für die Erfindung empfiehlt es sich, Katalysatoren mit einem entsprechenden Aufbau einzusetzen.

Es versteht sich, daß durch die Anordnung der entsprechen den Katalysatoren im Auspuffsystem dort veränderte Staudruckwerte entstehen. Durch die erfindungsgemäß verwendeten Metallbettkatalysatoren mit einer relativ geringen Zellendichte ändern sich die Staudruckwerte gegenüber vergleichbaren Auspuffsystem ohen Katalysatoreinbau nur in geringem Maße, so daß im Vergleich zu herkömmlichen Katalysatoren auch nur relative geringe Leistungsverluste der Brennkraftmaschine entstehen. Es war für die Fachwelt nicht zu erwarten, daß mit Katalysatoren einer derart geringen wirksamen Oberfläche die erfindungsgemäßen Ergebnisse erzielbar waren.

Die Erfindung wird nachfolgend anhand von Ausführungsbeispielen beschrieben.

Beispiel 1

Die in der nachfolgenden Tabelle aufgeführten Fahrzeuge wurden nach Optimierungsarbeiten und Einstellung der fahrzeugbezogenen Radlast auf einem Bosch-Leistungsprüfstand im USA-Zyklus FTP 75 gefahren. Die Fahrzeuge waren mit einem Zusatzluftzuführsystem und einem Metallkatalysator (200 Zellen/Zoll$^2$) der erfindungsgemäßen Art ausgestattet.

Die Abgasemissionswerte wurden für CO und HC mit einem Meßinstrument und Schreibgerät der Firma Linseis geprüft. Die $NO_x$-Werte wurden mit einem Meßgerät Nitrogen Oxides Analyzer der Firma Montor Labs gemessen.

Die Düsenkalibrierung und die Reglereinstellung des Zusatzluftzuführsystems wurden in Verbindung mit den geänderten Staudruckwerten im Auspuffsystem, die durch den Einbau des Metallkatalysators (200 Zellen) entstanden, festgelegt.

Es wurde der komplette USA-Zyklus gefahren. Die erzielten Ergebnisse sind in der folgenden Tabelle 1 aufgeführt. Die Fahrzeuge haben somit sogar die Grenzwerte des USA 83 unterschritten.

Da die Staudruckveränderungen im Auspuffsystem nur 0,13 m WS betragen, ist der Leistungsverlust der Fahrzeuge unter 3 % gemessen worden.

0 277 578

Tabelle 1

| PKW-Typ | % | g/T | CO<br>FTP 75<br>2,1 g/km<br>g/km | ppm | g/T | HC<br>FTP 75<br>0,25 g/km<br>g/km | ppm | g/T | NO$_x$<br>FTP 75<br>0,62 g/km<br>g/km |
|---|---|---|---|---|---|---|---|---|---|
| Opel Kadett D<br>1,3 N Bj. 1983<br>Km-Stand 120.000<br>Grenzwert FTP 72 | 0,08 | 3,9 | 0,97<br>9,3 | 100 | 1,5 | 0,37<br>0,9 | 300 | 2,4 | 0,6<br>1,2 |
| DAIHATSU-Cuore<br>4 WD 850 ccm<br>Bj. 87<br>Km-Stand 150 | 0,02 | 0,1 | 0,24 | 60 | 0,9 | 0,22 | 210 | 1,7 | 0,41 |
| VW-Golf II 1,6<br>Bj. 1985<br>Km-Stand 31.000 | 0,05 | 2,5 | 0,61 | 35 | 0,53 | 0,13 | 170 | 1,37 | 0,34 |

Die in der Tabelle 1 aufgeführten Ergebnisse sind weder mit einem Zusatzluftzuführsystem allein noch mit einem entsprechenden Metallkatalysator allein erreichbar. Sie können auch nicht mit einem ungeregelten Dreiwegekatalysator (Keramikkatalysator) erzielt werden. Sie werden allein mit einem geregelten Dreiwegekatalysator erreicht, wobei jedoch die erfindungsgemäße Lösung beträchtliche Kostenvorteile mit sich bringt, da sie auf ein aufwendiges Regelsystem (u. a. Lambda-Sonde) verzichten kann.

Beispiel 2

Zu Vergleichszwecken wurden an ein und demselben Fahrzeug Abgasemissionsmessungen durchgeführt, wobei dieses Fahrzeug als Serienfahrzeug, d. h. ohne jegliche Zusatzeinrichtungen, mit Zusatzluftzuführsystem, mit Zusatzluftzuführsystem und Metallkatalysator einer Zellendichte 100, nur mit Metallkatalysator einer Zellendichte 100, mit Zusatzluftzuführsystem und Metallkatalysator einer Zellendichte von 200 und nur mit Metallkatalysator einer Zellendichte 200 gemessen wurde. Die Ergebnisse dieser Messungen sind in Tabelle 2 aufgeführt. Die Messungen wurden jeweils in zwei Zyklen mit einer Geschwindigkeit von 30 km/h und einer Geschwindigkeit von 50 km/h durchgeführt. Wie die Ergebnisse zeigen, erreicht das mit Zusatzluftzuführsystem und Metallkatalysator mit 100 Zellen pro Zoll$^2$ ausgerüstete Fahrzeug die besten Abgaswerte in bezug auf CO, CH und NO$_x$, während diese Werte bei einem mit Zusatzluftzuführsystem und Metallkatalysator mit 200 Zellen pro Zoll$^2$ ausgerüsteten Fahrzeug wieder ansteigen, d. h. sich verschlechtern.

## Tabelle 2

Fahrzeug: Golf 1,6 ltr. Km 31.000 75 PS

| Km/h | CO % | HC ppm | $NO_x$ ppm | Staudruck im Ausp.-Krümmer mit mm WS | |
|---|---|---|---|---|---|
| 30 | 0,4 | 120 | 340 | 210 | Serie |
| 50 | 0,3 | 80 | 665 | 380 | Serie |
| 30 | 0,15 | 70 | 180 | 210 | mit Zusatzluft-zuführsystem |
| 50 | 0,1 | 40 | 350 | 380 | mit Zusatzluft-zuführsystem |
| 30 | 0,0 | 0,0 | 76 | 360 | mit Zusatzluft-zuführsystem und Kat 100 Z |
| 50 | 0,0 | 0,0 | 82 | 570 | " |
| 30 | 0,15 | 40 | 140 | 360 | nur Kat 100 Z |
| 50 | 0,15 | 30 | 180 | 570 | " |

| Km/h | CO % | HC ppm | $NO_x$ ppm | Staudruck im Ausp.- Krümmer mit mm WS | |
|---|---|---|---|---|---|
| 30 | 0,1 | 40 | 85 | 520 | mit Zusatz- luftzuführsys. u. 200 Kat |
| 50 | 0,2 | 40 | 95 | 730 | " |
| 30 | 0,25 | 65 | 90 | 520 | nur Kat 200 Z |
| 50 | 0,15 | 55 | 130 | 730 · | " |

mit Zusatzluftzuführsystem    Leistungsverlust  0   gegen Serie = 100 %

mit Zusatzluftzuführsystem    "          2 %  "
und 100 Kat.

mit Zusatzluftzuführsystem    "          7 %  "
und 200 Kat.

Beispiel 3

Es wurde ein Fahrzeug vom Typ Ford Sierra 1,6 gemäß ECE-R-15/04-Test untersucht. Dabei wurde das Fahrzeug ohne Zusatzeinrichtungen, mit Zusatzluftzuführsystem, mit Zusatzluftzuführsystem und Metallkatalysator einer Zellendichte 200, mit Zusatzluftzuführsystem und Metallkatalysator einer Zellendichte 400, nur mit Metallkatalysator einer Zellendichte 200 und nur mit Metallkatalysator einer Zellendichte 400 getestet. Die entsprechenden Abgaswerte sind in der folgenden Tabelle 3 aufgeführt. Man erkennt, daß die besten Abgaswerte von dem mit Zusatzluftzuführsystem und Metallkatalysator einer Zellendichte 200 ausgerüsteten Fahrzeug erzielt werden. Mit ansteigender Zellendichte (Zellendichte 400) verschlechtern sich die Werte.

## Tabelle 3

Fahrzeugtyp : Ford Sierra 1,6

|  | CO g/Test | HC g/Test | NO$_x$ g/Test |
|---|---|---|---|
| ohne Zusatzluftzuführsystem ohne Metallkatalysator Serienfahrzeug | 86,923 | .17,201 | 6,056 |
| mit Zusatzluftzuführsystem ohne Metallkatalysator | 47,940 | 15,461 | 4,663 |
| mit Zusatzluftzuführsystem und Metallkatalysator 200 Z | 14,866 | 2,335 | 2,612 |
| mit Zusatzluftzuführsystem und Metallkatalysator 400 Z | 11,841 | 2.775 | 2.706 |
| ohne Zusatzluftzuführsystem mit Metallkatalysator 200 Z | 33,317 | 3,917 | "2,851 |
| ohne Zusatzluftzuführsystem mit Metallkatalysator 400 Z | 35,893 | 3,638 | 2,022 |

Bei sämtlichen Ausführungsbeispielen betrug die Wandstärke des Wabenkörpers des Metallkatalysators 0,04 mm. Als katalytische Beschichtung kam eine handelsübliche Beschichtung im Verhältnis Platin : Rhodium von 5 : 1 zur Anwendung.

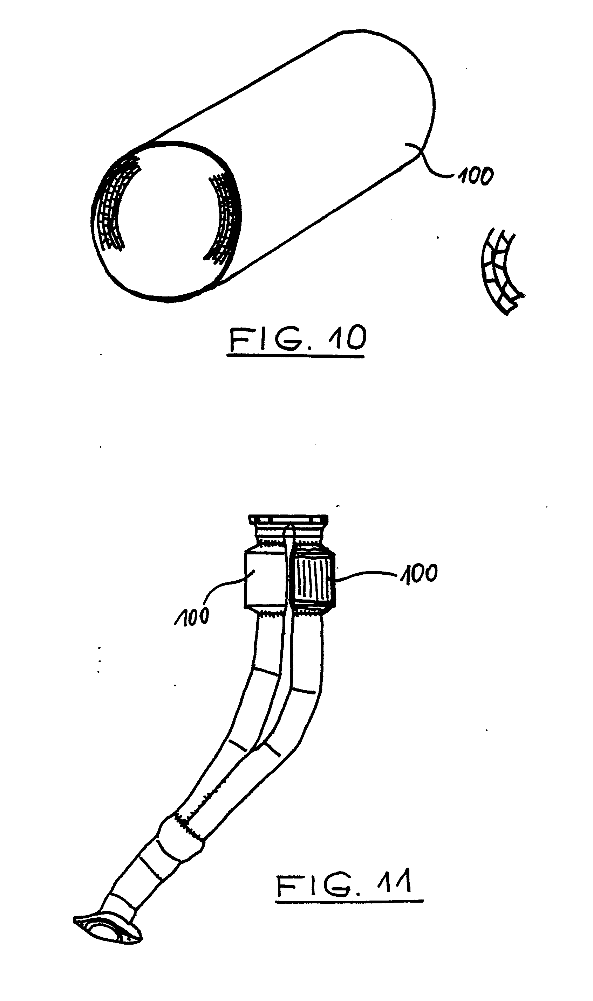

Abschließend sei noch auf die Figuren 10 und 11 verwiesen. Figur 10 zeigt eine perspektivische Ansicht eines Metallkatalysators 100, der in bevorzugter Weise bei der erfindungsgemäßen Lösung zur Anwendung gelangt. In vergrößertem Maßstab ist ein Teil des Wabenkörpers dargestellt. Die Wandstärke des Wabenkörpers beträgt 0,04 mm. Auf dem Träger ist als Washcoat eine Al$_2$O$_3$-Beschichtung vorgesehen, auf der die katalytische Beschichtung in handelsüblicher Stärke aufgebracht ist.

Figur 11 zeigt eine Draufsicht auf ein Hosenrohr, in das zwei Katalysatoren 100 der in Figur 10 dargestellten Art eingebaut sind. Wie man erkennt, ist die Lage der Katalysatoren unmittelbar benachbart zur Brennkraftmaschine. Die hier dargestellten Katalysatoren sind zylindrisch ausgebildet. Es versteht sich, daß auch andere Formen, beispielsweise ovale Formen, Anwendung finden können.

## Ansprüche

1. Verfahren zur Reduzierung von Schadstoffen im Abgas einer mit einem Luft-Kraftstoff-Gemisch betriebenen Brennkraftmaschine mit einer katalytischen Entgiftung der Abgase, dadurch gekennzeichnet, daß man zur Verringerung der $NO_x$-und CO-Konzentrationen im Abgas das der Brennkraftmaschine zugeführte Luft-Kraftstoff-Gemisch durch Zugabe von Zusatzluft abmagert und die im Abgas enthaltenen Kohlenwasserstoffe katalytisch in Kohlendioxid umwandelt.

2. Verfahren nach Anspruch 1, dadurch gekennzeichnet, daß man als Zusatzluft ein Gemisch aus Außenluft und der aus dem Kurbelgehäuse der Brennkraftmaschine stammenden Atmosphäre verwendet.

3. Verfahren nach Anspruch 1 oder 2, dadurch gekennzeichnet, daß man das Luft-Kraftstoff-Gemisch auf $\lambda$ -Werte zwischen 1,15 und 1,35 abmagert.

4. Vorrichtung zur Durchführung des Verfahrens nach einem der Ansprüche 1 bis 3, dadurch gekennzeichnet, daß sie eine das der Brennkraftmaschine zugeführte Luft-Kraftstoff-Gemisch mit Zusatzluft beaufschlagende Einrichtung (2) zur Abmagerung des Luft-Kraftstoff-Gemisches aufweist und daß der Katalysator (5) als ungeregelter Einbettkatalysator (Dreiwegekatalysator) ausgebildet ist.

5. Vorrichtung zur Durchführung des Vefahren nach einem der Ansprüche 1 bis 3, dadurch gekennzeichnet, daß sie eine das der Brennkraftmaschine zugeführte Luft-Kraftstoff-Gemisch mit Zusatzluft beaufschlagende Einrichtung zur Abmagerung des Luft-Kraftstoff-Gemisches aufweist und daß der Katalysator als Oxidationskatalysator ausgebildet ist.

6. Vorrichtung nach Anspruch 4 oder 5, dadurch gekennzeichnet, daß der Katalysator (5) ein Metallbettkatalysator ist.

7. Vorrichtung nach einem der Ansprüche 4 bis 6, dadurch gekennzeichnet, daß der Katalysator (5) im Bereich des Auslaßkrümmers (6) angeordnet ist.

8. Vorrichtung nach Anspruch 7, dadurch gekennzeichnet, daß der Katalysator (5) direkt an der Verbindung des Auslaßkrümmers (6) mit dem Motorblock (1) angeordnet ist.

9. Vorrichtung nach einem der Ansprüche 4 bis 7, bei der die Brennkraftmaschine einen Vergaser, einen Ansaugkanal, ein Luftfilter, ein Kurbelgehäuse, eine Drosselklappe und einen Zündverteiler aufweist, dadurch gekennzeichnet, daß die Einrichtung zur Zuführung der Zusatzluft (2) die Zusatzluft stromab der Drosselklappe zu führt und eine Verbindungsleitung (21) zwischen Luftfilter und Kurbelgehäuse (60), eine vom Ansaugkanal zum Zündverteiler führende Leitung (41), ein im Ansaugkanal angeordnetes rohrflanschartiges Verteilerzwischenstück, eine Zuströmleitung (22) für die Zusatzluft, die an das Luftfilter und an die Verbindungsleitung (21) angeschlossen und der ein Regelorgan (50) für die Zusatzluft zugeordnet ist, und einen im Verteilerzwischenstück vorgesehenen Verteiler (17) mit einer Vielzahl von in den Ansaugkanal mündenden schlitzförmigen Austrittsöffnungen umfaßt, daß das Regelorgan mit der Leitung (41) verbunden ist und daß der Verteiler als Hohlsteg (10) ausgebildet ist, dessen Längsachse mit einem Durchmesser des Ansaugkanales zusammenfällt, und daß am Eingang des Hohlsteges (10) eine Verengung angeordnet ist.

10. Vorrichtung nach Anspruch 9, dadurch gekennzeichnet, daß der Hohlsteg (10) zwei winklig zur Strömungsrichtung im Ansaugkanal angestellte Schrägflächen (13, 14) aufweist, auf denen jeweils eine Reihe der shclitzförmigen Ausströmöffnungen (11) angeordnet ist, wobei die Ausströmöffnungen (11) auf beiden Schrägflächen (13, 14) in der Draufsicht schiefwinklig zur Hohlstegachse angestellt sind.

11. Vorrichtung nach Anspruch 10, dadurch gekennzeichnet, daß die schlitzförmigen Ausströmöffnungen (11) der einen Reihe mit den schlitzförmigen Ausströmöffnungen (11) der anderen Reihe einen Winkel bilden.

12. Vorrichtung nach Anspruch 10, dadurch gekennzeichnet, daß der Hohlsteg (10) hälftig derart unterteilt ist, daß die eine Hälfte eine Schrägfläche (13) und die andere Hälfte eine weitere Schrägfläche (14) bildet.

13. Vorrichtung nach einem der Ansprüche 9 - 12, dadurch gekennzeichnet, daß die Achse des Hohlsteges (10) mit der Achse der Drosselklappe (31) einen Winkel von 20° bildet.

14. Vorrichtung nach Anspruch 10, dadurch gekennzeichnet, daß der Hohlsteg (10) eine die beiden Schrägflächen (13, 14) miteinander verbindende Halbrundbasis aufweist.

15. Vorrichtung nach einem der Ansprüche 9 - 14, dadurch gekennzeichnet, daß das Regelorgan (50) eine durch eine Membran (58) begrenzte Steuerkammer (57), die mit der vom Ansaugkanal zum Zündverteiler (40) führenden Leitung (41) in Verbindung steht, und einen mit der Membran (58) verbundenen, den Querschnitt der Zuströmleitung (22) variierenden Reglerkolben (55) aufweist.

16. Vorrichtung nach Anspruch 15, dadurch gekennzichnet, daß das Regelorgan (50) eine Bypassregelung (51), eine Leerlaufregelung (52) und eine Druckregelung (53) für den Reglerkolben (55) aufweist.

17. Vorrichtung nach einem der Ansprüche 4 bis 16, dadurch gekennzeichnet, daß der Katalysator eine Beschichtung aus Platin, Rhodium und/oder Paladium aufweist.

18. Vorrichtung nach Anspruch 17, dadurch gekennzeichnet, daß der Katalysator eine Beschichtung im Verhältnis Platin (Paladium) : Rhodium größer 5 : 1 besitzt.

19. Vorrichtung nach einem der Ansprüche 6 bis 18, dadurch gekennzeichnet, daß der Metallbettkatalysator (100) einen monolithischen Wabenkörper als Träger umfaßt, der von einem Mantelrohr umgeben ist.

20. Vorrichtung nach Anspruch 19, dadurch gekennzeichnet, daß der Wabenkörper eine Wandstärke von 0,03 bis 0.05 mm besitzt.

21. Vorrichtung nach einem der Ansprüche 6 bis 20, dadurch gekennzeichnet, daß der Metallbettkatalysator (100) eine Zellendichte (Zahl der Zellen/Zoll$^2$) von 80 0 250 aufweist.

22. Vorrichtung nach Anspruch 21, dadurch gekennzeichnet, daß die Zellendichte 80 - 150, insbesondere 100, beträgt.

14

FIG.1

0 277 578

## Fig. 2

FIG. 3

FIG. 4

FIG. 5

FIG. 6

FIG.7

Druckregelschraube

53

51

50

57

58

55

56

FIG.8

zum Mischer

Filterluft

Unterdruckleitung

SA

Zusatzluft

**FIG. 9**

FIG. 10

FIG. 11